# EUROPÄISCHE PATENTSCHRIFT

(11) **EP 0 342 693 B1**
(45) Veröffentlichungstag und Bekanntmachung des Hinweises auf die Patenterteilung: **27.10.1993**
(21) Anmeldenummer: 89109035.9
(22) Anmeldetag: 18.05.1989
(51) Int. Cl.: H02J 9/06

(54) **Gleichspannungsversorgungssystem mit mehreren Gleichspannungsquellen**
DC power supply system with a plurality of DC sources
Système d'alimentation en courant continu avec plusieurs sources de courant continu

(30) Priorität: 18.05.1988 DE 3816944
(43) Veröffentlichungstag der Anmeldung: 23.11.1989
(73) Patentinhaber: Siemens Nixdorf Informationssysteme Aktiengesellschaft, 33102 Paderborn (DE)
(72) Erfinder: Pollmeier, Werner, D-4837 Verl 1 (DE)
(74) Vertreter: Fuchs, Franz-Josef, Dr.-Ing.

(56) Entgegenhaltungen:
- EP-A- 299 323
- WO-A-86/07210
- DE-A- 2 531 680
- US-A- 3 049 623
- US-A- 4 492 876
- US-A- 4 617 473
- ELECTRONIQUE APPLICATIONS. no. 52, März 1987, PARIS FR Seite 45 - 50; J. NADOLSKI: "Pour les ensembles basse-tension: la solution "Q-MOS""

## Beschreibung

Die Erfindung betrifft ein Gleichspannungsversorgungssystem nach dem Oberbegriff des Patentanspruchs 1.

Ein solches System ist aus der US-A-4 492 876 bekannt und wird zur Spannungsversorgung hochwertiger elektronischer Systeme, beispielsweise Computersysteme oder Sicherheitseinrichtungen, benötigt. Bei Ausfall einer Spannungsquelle versorgt es den betroffenen Spannungsausgang selbsttätig aus einer anderen Spannungsquelle und gewährleistet so eine unterbrechungsfreie Spannungsversorgung.

Das Steuern des Schaltzustandes einer Schalteranordnung erfolgt dabei über Steuersignale, die abhängig vom Betriebszustand der jeweiligen Spannungsquelle erzeugt werden. Beginnt z.B. die Spannung einer ersten Spannungsquelle unter einen vorgegebene Wert abzusinken, so wird ein Steuersignal erzeugt, das die Schalteranordnung der betreffenden Spannungsquelle in den Sperrzustand steuert und damit das Speisen des entsprechenden Spannungsausgangs über diese Spannungsquelle abschaltet. Ferner wird ein zweites Steuersignal gebildet, das eine zu einer anderen Spannungsquelle gehörende Schalteranordnung in den leitenden Zustand steuert und dadurch die Spannungsversorgung des Spannungsausgangs sicherstellt. Hierzu soll aber die erste Schalteranordnung zuvor vollständig gesperrt sein. Um dennoch eine lückenlose Spannungsversorgung der an den alternativ gespeisten Spannungsausgang angeschlossenen Geräte zu gewährleisten, ist ein Kondensator erforderlich, der in dem Schaltintervall die nötige Energie zur Speisung des Spannungsausgangs liefert.

Der jeweilige Schaltvorgang läuft nicht abrupt, sondern in einer verlängerten Schaltzeit ab, denn ein zu steiler Spannungsanstieg kann bei der betroffenen Spannungsquelle einen Stromstoß zur Folge haben, der die Spannungsquelle überlastet. Durch die verlängerte Schaltzeit wird erreicht, daß ein weiches Einschalten bzw. Abschalten der Spannungsquellen erfolgt. Unter Schaltzeit wird die Übergangszeit vom sperrenden in den leitenden Zustand und umgekehrt der Schalteranordnung verstanden.

Aus der nachveröffentlichten EP-A-0299323 ist ferner ein Gleichspannungsversorgungssystem mit mehreren Spannungsausgängen bekannt, die aus mindestens zwei Gleichspannungsquellen gespeist werden. Ein als Pufferausgang bezeichneter Spannungsausgang wird alternativ aus einer ersten oder zweiten Gleichspannungsquelle gespeist. Ein weiterer Spannungsausgang wird aus einer Spannungsquelle fest gespeist. Zum alternativen Speisen wird ein erster Schalter sowie ein zweiter Schalter so geschaltet, daß sich deren zueinander gegensinnige Schaltvorgänge einander überlappen. Die Schalter werden abhängig vom Betriebszustand der jeweiligen Gleichspannungsquelle durch Steuersignale geschaltet.

Es ist Aufgabe der Erfindung, ein Gleichspannungsversorgungssystem anzugeben, das einen weitgehend gleichmäßigen Spannungspegel beim Umschalten erzeugt.

Diese Aufgabe wird durch die Merkmale des Patentanspruchs 1 gelöst.

Neben der Steuerung der Schalteranordnung über Steuersignale, die abhängig vom Betriebszustand der jeweiligen Spannungsquelle gebildet werden, ist es auch möglich, diese extern z.B. in einer übergeordneten Zentrale zu erzeugen. Damit können die Spannungsquellen gezielt wirksam bzw. unwirksam sowie die Spannung an den Spannungsausgängen ein- bzw. ausgeschaltet werden.

Eine Weiterbildung kann darin bestehen, daß mindestens eine Schalteranordnung als Längsregler in eine am zugehörigen Spannungsausgang vorgesehene Regeleinrichtung einbezogen ist. Dadurch wird erreicht, daß am Spannungsausgang eine geregelte Spannung bereitgestellt wird. Der zur Spannungsregelung normalerweise notwendige Leistungstransistor kann entfallen, wenn die Schalteranordnung im den Längsregelzweig einer Regelschaltung eingegliedert wird und dabei die Aufgabe eines Regeltransistors übernimmt.

Ein Ausführungsbeispiel der Erfindung wird anhand der Zeichnung näher erläutert. Es zeigen:
- Fig. 1: ein Spannungsversorgungssystem mit zwei Spannungsquellen und zwei Spannungsausgängen,
- Fig. 2: eine Schaltungsanordnung zum Erzeugen von Steuersignalen, und
- Fig. 3: den Verlauf von Steuersignalen und den Zustand von Schalteranordnungen in der Schaltanordnung mach Fig. 1 über der Zeit.

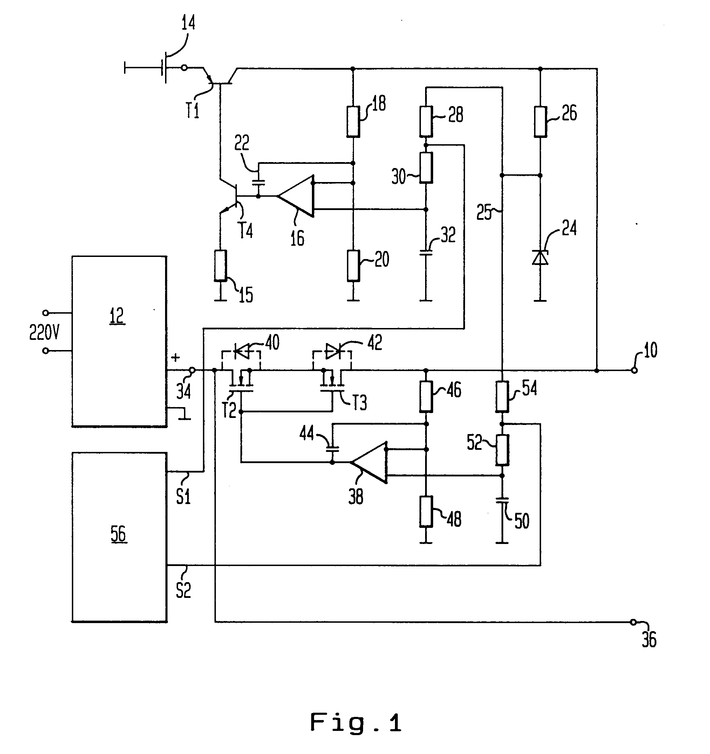

In Fig. 1 ist ein Spannungsversorgungssystem dargestellt, dessen Spannungsausgang 10 alternativ von einem an das 220-Volt-Wechselstromnetz angeschlossenen Schaltnetzteil 12 oder im Notfall aus einer Batterie 14 gespeist werden kann. Die Batterie 14 ist mit dem Emitter eines pnp-Transistors T1 verbunden, dessen Kollektor zum Spannungsausgang 10 geführt ist. Die Basis des Transistors T1 ist mit dem Kollektoranschluß eines Hilfstransistors T4 verbunden, der vom Leitfähigkeitstyp npn ist und dessen Emitterelektrode über einen Widerstand 15 an Masse liegt. Seine Basiselektrode ist mit dem Ausgang eines Operationsverstärkers 16 verbunden, dessen invertierter Eingang an den Mittelabgriff eines aus Widerständen 18, 20 bestehenden Spannungsteilers gelegt ist, der mit dem Spannungsausgang 10 verbunden ist. Der Opertionsverstärker 16 ist als Integrator geschaltet und hat zwischen seinem Ausgang und seinem invertierenden Eingang einen Kondensator 22. Zwischen dem Spannungsausgang 10 und Bezugspotential sind ein Vorwiderstand 26 und eine Zenerdiode 24 in Reihe geschaltet. Am Kathodenanschluß der Zenerdiode 24 wird eine Referenzspannung 25 abgegriffen und einem Spannungsteiler, bestehend aus der Reihenschaltung eines Widerstandes 28, eines Widerstandes 30 und eines Kondensators 32 zugeführt. Der Kondensator 32 ist mit dem nicht invertierenden Eingang des Operationsverstärkers 16 verbunden. Dem Verbindungspunkt der Widerstände 28, 30 wird ein Steuersignal S1 zugeführt.

Der Spannungsabgriff des Schaltnetzteils 12 ist an einer Klemme 34 herausgeführt, die direkt mit einem weiteren Spannungsausgang 36 des Spannungsversorgungssystems verbunden ist. Zwischen dem Spannungsausgang 10 und der Klemme 34 liegt eine aus einem ersten MOS-Transistor T2 und einem zweiten MOS-Transistor T3 bestehende Schalteranordnung. Die Gate-Anschlüsse der Transistoren T2, T3 sind gemeinsam an den Ausgang eines Operationsverstärkers 38 geführt. Die Source-Anschlüsse der Transistoren T2, T3 sind direkt miteinander verbunden. Der Drain-Anschluß des Transistors T2 ist an die Klemme 34 und der Drain-Anschluß des Transistors T3 an den Spannungausgang 10 gelegt.

Die MOS-Transistoren T2, T3 sind selbstsperrende n-Kanal-Feldeffekt-Transistoren und können nur in Drain-Source-Richtung sperren. In der Gegenrichtung sind diese Transistoren über ihre sogenannte Inversdiode leitend. Die zu den Transistoren T2, T3 gehörenden Inversdioden 40 bzw. 42 sind in Fig. 1 zwischen den jeweiligen Drain-Source-Anschlüssen gestrichelt eingezeichnet. Durch das Zusammenschalten der Transistoren T2, T3 an ihre Source-Anschlüssen wird einer der Transistoren T2, T3 invers betrieben, beim Beispiel nach Fig. 1 der Transistor T3.

Der Ausgang des als Integrator geschalteten Operationsverstärkers 38 ist über einen Kondensator 44 mit seinem invertierenden Eingang verbunden. Dieser ist an den Mittelabgriff des aus Widerständen 46, 48 bestehenden Spannungsteilers angeschlossen, der über den Spannungsausgang 10 gespeist wird. Der nicht invertierende Eingang des Operationsverstärkers 38 ist mit einem Kondensator 50 verbunden, der mit einem Anschluß an Masse liegt. Der Kondensator 50 ist über in Serie geschaltete Widerstände 52, 54 mit dem Kathodenanschluß der Zenerdiode 24 verbunden. Am Verbindungspunkt der Widerstände 52, 54 wird ein zweites Steuersignal S2 zugeführt.

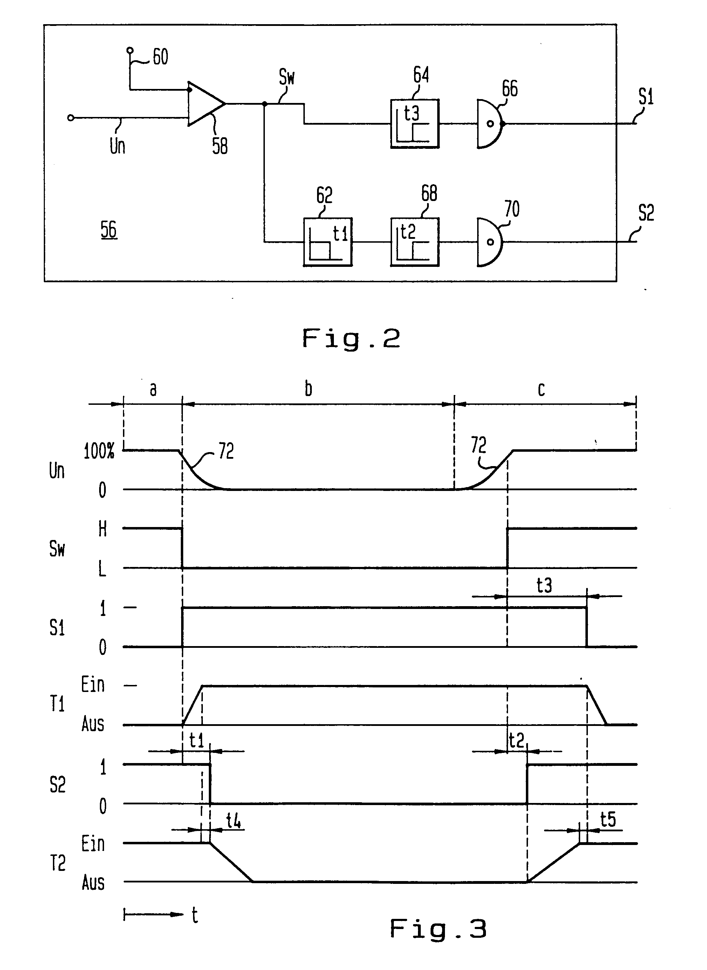

Die Steuersignale S1, S2 werden von einer Steuerung 56 erzeugt, welche den Spannungspegel des Schaltnetzteils 12 überwacht bzw. Steuersignale einer nicht dargestellten übergeordneten Zentrale verarbeitet. Die Schaltungsanordnung einer solchem Steuerung 56 ist in Fig. 2 dargestellt. Einem Schwellwertschalter 58 ist an seinem invertierenden Eingang eine Referenzspannung 60 und an seinem nicht invertierenden Eingang ein der Netzspannung des Schaltnetzteils 12 proportionales Spannungssignal Un zugeführt. Der Schwellwertschalter 58 erzeugt an seinen Ausgang ein Ausgangssignal Sw mit High-Pegel, wenn der Pegel des Spannungssignals Um höher als die Referenzspannung 60 ist, anderfalls ein Ausgangssignals Sw mit Low-Pegel. Der Ausgang des Schwellwertschalters 58 ist mit einem die Wirkung der abfallenden Flanke des Ausgangssignals Sw um eine Zeit t1 verzögernden Zeitglied 62 sowie mit einem die Wirkung der ansteigenden Flanke des Ausgangssignals Sw um die Zeit t3 verzögernden Zeitglied 64 verbunden. Diesem ist ein Inverter 66 mit Open-Kollektor-Ausgang nachgeschaltet. Dieser erzeugt ein Signal S1 mit annähernd Massepotential, wenn an den Eingang des Inverters 66 ein Signal mit High-Pegel gelegt wird. Bei einem Eingangssignal mit Low-Pegel geht der Ausgang des Inverters 66 im einen hochohmigen Zustand über, d.h. dem Steuersignal S1 wird über den Inverter 66 kein bestimmter Spannungspegel vorgegeben. Dem Zeitglied 62 ist ein weiteres Zeitglied 68 nachgeschaltet, welches die Anstiegsflanke des Ausgangs Sw um eine Zeit t2 verzögert. Das Zeitglied 68 steuert ein Gatter 70, das ebenfalls einen Open-Kollektor-Ausgang besitzt und das Steuersignal S2 erzeugt.

Fig. 3 zeigt den Verlauf verschiedener Signale sowie den Zustand der Transistoren T1, T2 über der Zeit t in verschiedenen Betriebszuständen a,b,c, die noch näher erläutert werden. Das Spannungssignal Un kann zwischen einem Nennwert, der mit 100 % angegeben ist, und dem Wert 0 schwanken. Das Ausgangsignal Sw des Schwellwertschalters 58 kann wie beschrieben die Zustände L (Low-Pegel) und H (High-Pegel) annehmen. Die Steuersignale S1, S2 besitzen ebenfalls zwei Zustände, die mit logisch 0 und logisch 1 bezeichnet sind. Im Zustand logisch 0 liegen die Steuersignale S1, S2 auf Massepotential, im Zustand logisch 1 sind diese in einen hochohmigen Zustand. Die Transistoren T1, T2 besitzen die Zustände "Sperren" und "Leiten", die in Fig. 3 mit "Aus" bzw. "Ein" bezeichnet sind. Zwischen diesen Zuständen werden die Transistoren T1, T2 in einer vorgegebenen Schaltzeit hin- und hergeschaltet, so daß der Spannungsanstieg bzw. der Spannungsabfall am Ausgang der Transistoren T1, T2 flach verläuft.

Die Funktion des Spannungsversorgungsystem wird nun unter Bezugnahme auf die Fig. 1, 2 und 3 erläutert. Zunächst wird angenommen, daß das Schaltnetzteil 12 ordnungsgemäß arbeitet und an der Klemme 34 positive Spannung anliegt (Betriebszustand a in Fig. 3). Das Spannungssignal Un ist im normalen Betriebszustand größer als die Referenzspannung 60, und der Schwellwertschalter 58 in Fig. 2 hat an seinem Ausgang ein Ausgangsignal Sw mit High-Pegel. Demzufolge wird am Ausgang des Inverters 66 ein Steuersignal S1 mit Zustand logisch 0 und am Ausgang des Gatters 70 ein Steuersignal S2 mit Zustand logisch 1 erzeugt.

Da das Steuersignal S1 Massepotential führt, ist auch die Spannung am nicht invertierenden Eingang des Operationsverstärkers 16 in Fig. 1 annähernd Null. Auch die Ausgangspannung des Operationsverstärkers 16 ist somit gleich Null, und die Transistoren T4 und T1 sperren. Die Batterie 14 ist damit vom Spannungsausgang 10 abgekoppelt.

Das hochohmige Steuersignal S2 belastet dagegen den aus den Widerständen 54, 52 bestehenden Spannungsteiler nicht. Dem nicht invertierenden Eingang des Operationsverstärkers 38 wird somit die Referenzspannung 25 der Zenerdiode 24 zugeführt. Der Operationsverstärker 38 bildet zusammen mit den Transistoren T2, T3 einen Regelkreis. Der Operationsverstärker 38 arbeitet in diesem als PI-Regler und die Transistoren T2, T3 als Stellglieder. Am invertierenden Eingang des Operationsverstärkers 38 wird der Istwert zugeführt, an seinem nicht invertierenden Eingang der Sollwert. Der Operationsverstärker 38 führt den Soll-Istwertvergleich durch und stellt an seinem Ausgang eine Spannung so ein, daß die Transistoren T2, T3 über ihre Gate-Elektrode leitend gesteuert werden und die Soll-Istwertabweichung minimal wird. Das Zeitverhalten des Regelkreises wird dabei durch die Zeitkonstante, die sich aus den Widerständen 46, 48 und dem Kondensator 44 ergibt, eingestellt.

Für den nächsten Betriebszustand b der Fig. 3 sei angenommen, daß die Netzspannung, die das Schaltnetzteil versorgt, ausfällt. Das Spannungssignal Un fällt dann exponentiell ab und unterschreitet bei der Schwelle 72 die Referenzspannung 60. Ein Ausfall der Netzspannung des Schaltnetzteils 12 bedeutet aber nicht, daß auch seine Ausgangsspannung abrupt abfällt, sondern die in Kondensatoren des Schaltnetzteils gespeicherte Energie reicht noch aus, um für eine bestimmte Zeit weiterhin Spannung abzugeben. Nachdem das Spannungssignal Un die Referenzspannung 60 unterschritten hat, schaltet der Schwellwertschalter 58 in Fig. 2 sein Ausgangssignal Sw auf Low-Pegel um, und der Inverter 66 erzeugt an seinem Ausgang das Steuersignal S1 mit Zustand logisch 1. Die abfallende Flanke des Ausgangssignals Sw des Schwellwertschalters 58 wird durch das Zeitglied 62 um eine Zeit t1 verzögert und schaltet über das Gatter 70 das Steuersignal S2 in den Zustand logisch 0.

Der Kondensator 32 in Fig. 1 wird über die in Reihe geschalteten Widerstände 28, 30 auf die Referenzspannung 25 aufgeladen. Der als Regler arbeitende Operationsverstärker 16 steuert den Transistor T4 leitend, der den Transistor T1 mit Basisstrom versorgt, so daß dieser eingeschaltet wird. Die Schaltzeit des Transistors T1 ist dabei durch die Zeitkonstante des Operationsverstärkers 16, die sich aus seiner Beschaltung mit den Widerständen 18, 20 sowie dem Kondensator 22 ergibt, sowie durch die Zeitkonstante aus den Widerständen 28, 30 und dem Kondensator 32 bestimmt. Die vom Transistor T1 abgegebene Spannung wird über den Spannungsteiler, bestehend aus den Widerständen 18, 20, dem Operationsverstärker 16 zugeführt, mit dem Spannungspegel der Zenerdiode 24 verglichen und auf einen konstanten Wert geregelt.

Wie bereits beschrieben, führt das Steuersignal S2 nach Ablauf der Zeit t1 Massepotential, d.h. der Kondensator 50 wird mit einer Zeitkonstante entladen, die der Widerstand 52 und der Kondensator 50 bilden. Der als Regler arbeitende Operationsverstärker 38 erhält somit eine gegen Null gehende Sollwertspannung und steuert die MOS-Transistoren T2, T3 in den sperrenden Zustand. Da die MOS-Transistoren T2, T3 an ihren Source-Elektroden verbunden sind, ist eine der Inversdioden 40, 42 in Sperrichtung geschaltet, so daß eine Rückspeisung des Schaltnetzteils 12 unterbleibt.

Die beschriebenen gegensinnigen Schaltvorgänge, d.h. das Einschalten des Transistors T1 bzw. das Ausschalten der Transistoren T2, T3 werden über die genannten Zeitkonstanten so eingestellt, daß sie sich um eine Zeit t4 überlappen, wie in der Fig. 3 dargestellt ist. Der Spannungsausgang 10 behält während dieser Schaltvorgänge seinen Spannungspegel unverändert bei.

Nachfolgend wird der Betriebszustand der Spannungswiederkehr des Schaltnetzteils 12 behandelt, der in der Fig. 3 unter c dargestellt ist. Bei Spannungswiederkehr steigt das Spannungsignal Un an und überschreitet beim Schwellwert 72 die Referenzspannung 60. Der Schwellwert 58 in Fig. 2 schaltet sein Ausgangssignal Sw von Low-Pegel nach High-Pegel um. Nach einer Zeit t3 wird das Steuersignal S1 durch den Inverter 66 in den Zustand logisch 0 gesteuert, während das Steuersignal S2 nach Ablauf der Zeit t2 in einen hochohmigen Zustand umgeschaltet wird. Die Zeit t2 wird dabei so eingestellt, daß vor Ablauf dieser Zeit das Schaltnetzteil 12 seine volle Betriebsspannung erreicht hat. Das Steuersignal S2 belastet nunmehr den aus den Widerständen 52, 54 und dem Kondensator 50 bestehenden Spannungsteiler nicht mehr, und der Kondensator 50 wird über die Widerstände 52, 54 auf die Spannung 25 der Zenerdiode 25 aufgeladen. Der Operationsverstärker 38 steuert die Transistoren T2, T3 entsprechend der ansteigenden Ladespannung am Kondensator 50 in den leitenden Zustand und das Schaltnetzteil 12 speist den Spannungsausang 10 mit Spannung.

Das Steuersignal S1, das annähernd Massepotential hat, bewirkt ein Entladen des Kondensators 32 über den Widerstand 30. Der Transistor T1 wird demzufolge über den Transistor T4 und den Operationsverstärker 16 in den sperrenden Zustand geschaltet und die Batterie 14 vom Spannungsausgang 10 abgekoppelt. Auch die Schaltvorgänge zum Ein- bzw. Ausschalten der Transistoren T2, T3 bzw. T1 erfolgen überlappend, d.h. die Zeitkonstanten sind jeweils so gewählt, daß eine Überlappungszeit t5 entsteht, in der die Transistoren T1, T2, T3 leitend gesteuert sind, wie in Fig. 3 dargestellt ist.

Die Schaltzeiten der Transistoren T1, T2, T3 sind jeweils so einzustellen, daß sie länger als die Ausregelzeit des Schaltnetzteils 12 sind. Dadurch wird sichergestellt, daß das Schaltnetzteil 12 durch dynamische Regelvorgänge beim Ausregeln von Störungen nicht überlastet wird. Die Spannung der Zenerdiode 24, die als Sollwertspannung zum Regeln der Ausgangsspannung am Spannungsausgang 10 dient, wird über den Vorwiderstand 26 am Spannungsausgang 10 abgegriffen. Ein kurzzeitiger Spannungseinbruch am Spannungsausgang 10 läßt somit auch die Spannung an der Zenerdiode 24 absinken, wodurch die Transistoren T1, T2, T3 auf eine niedrigere Ausgangsspannung geregelt werden. Damit arbeitet das Spannungsversorgungssystem auch bei kurzzeitiger Überlastung zuverlässig. Gleiches gilt auch für die Operationsverstärker 16, 38, deren Betriebsspannung (nicht dargestellt) ebenfalls am Spannungsausgang 10 abgegriffen wird. Bei Absinken der Spannung am Spannungsausgang 10 sinken die Ausgangsspannungen der Operationsverstärker, wodurch die Transistoren T2, T3 jeweils in den sicheren Sperrzustand gesteuert werden.

Das in Fig. 1 dargestellte Ausführungsbeispiel kann noch durch verschiedene Schaltungsmaßnahmen ergänzt werden. So ist es möglich, zwischen den Spannungsausgang 36 und die Klemme 34 weitere Transistoren, die als Schalteranordnung arbeiten, einzufügen. Über Steuersignale, die diese Transistoren steuern, kann der Spannungsausgang 36 an die Ausgangsspannung des Schaltnetzteils 12 an- bzw. abgekoppelt werden. Weiterhin ist es auch möglich, mehrere Transistoren parallel zu schalten, um den Strom aufzuteilen und so die an einem Transistor auftretende Verlustleistung sowie den Spannungsabfall weiter zu verringern.

Ebenso ist es möglich, den Anschluß des Widerstandes 54 nicht mit der Zenerdiode 24 sondern über einen weiteren Spannungsteiler (nicht dargestellt) mit der Klemme 34 zu verbinden. Die als Sollwert dienende Spannung des Kondensators 50 ist dann proportional der Spannung des Schaltnetzteils 12. Bei Abfallen dieser Spannung werden die Transistoren T2, T3 über den als Regler arbeitenden Operationsverstärker 38 gesperrt und bei Spannungswiederkehr diese erst nach Erreichen der vollen Betriebsspannung des Schaltnetzteils 12 leitend geschaltet. Durch diese Maßnahme wird die Zuverlässigkeit des Spannungsversorgungssystems weiter erhöht.

## Patentansprüche

1. Gleichspannungsversorgungssystem mit mindestens einem aus mindestens zwei Gleichspannungsquellen (12, 14) gespeisten Spannungsausgang (10) der alternativ aus einer ersten Gleichspannungsquelle (12), der eine Versorgungsspannung zugeführt ist, und einer weiteren Gleichspannungsquelle (14) jeweils über eine Schalteranordnung (T1, T2, T3) durch Steuersignale (S1, S2) gespeist wird, die den Schalterzustand der jeweiligen Schalteranordnung (T1, T2, T3) unter Verlängerung der Schaltzeit steuern, wobei die Speisung bei zueinander gegensinnigen Schaltvorgängen aufrecht erhalten bleibt, dadurch **gekennzeichnet**, daß mindestens ein weiterer Spannungsausgang (36) vorgesehen ist, der fest aus einer der Spannungsquellen (12, 14) gespeist wird, daß die Steuersignale (S1, S2) abhängig von der Versorgungsspannung und gegebenenfalls extern erzeugt werden, wobei die Ausgangsspannung der ersten Gleichspannungsquelle (12) nicht abrupt mit der Versorgungsspannung abfällt, und daS Zeitglieder (62, 64, 68) zur Abgabe der Steuersignale so eingestellt werden, daS die Schalteranordnung (T1, T2, T3) während einer bestimmten Überlappungszeit (t4, t5) gemeinsam leitend gesteuert sind.

2. System nach Anspruch 1, dadurch **gekennzeichnet**, daß auch zwischen dem jeweiligen weiteren Spannungsausgang (36) und der ihn speisenden Spannungsquelle (12) eine Schalteranordnung vorgesehen ist.

3. System nach Anspruch 1 oder 2, dadurch **gekennzeichnet**, daß mindestens eine Schalteranordnung (T1, T2, T3) als Längsregler in eine am zugehörigen Spannungsausgang (10) vorgesehene Regeleinrichtung einbezogen ist.

4. System nach Anspruch 3, dadurch **gekennzeichnet**, daß die Betriebspannung der Regeleinrichtung an ihrem Spannungsausgang (10) abgegriffen wird.

5. System nach einem der vorhergehenden Ansprüche, dadurch **gekennzeichnet**, daß die Schalteranordnung (T1, T2, T3) aus einem oder mehreren parallelgeschalteten Transistoren besteht.

6. System nach einem der vorhergehenden Ansprüche, dadurch **gekennzeichnet**, daß eine Schalteranordnung aus einem Paar oder mehreren parallelgeschalteten Paaren von MOS-Feldeffekttransistoren (T2, T3) besteht, die mit ihren Source-Drain-Strecken in Reihe geschaltet sind, von denen ein MOS-Feldeffekttransistor (T3) invers betrieben wird.

7. System nach einem der vorhergehenden Ansprüche, mit einem geregelten Schaltnetzteil (12) als Spannungsquelle, dadurch **gekennzeichnet**, daß die Schaltzeit länger als die Ausregelzeit des Schaltnetzteils ist.

8. System nach einem der Ansprüche 3 bis 7, dadurch **gekennzeichnet**, daß die Sollwertspannung der Regeleinrichtung aus der zugehörigen Spannungsquelle (12, 14) erzeugt wird.

9. System nach einem der vorhergehenden Ansprüche, dadurch **gekennzeichnet**, daß die Verlängerung der Schaltzeit durch Einstellen des jeweiligen Widerstandes der Zeitglieder (28, 30, 32 und 54, 52, 50) veränderbar ist.

## Claims

1. DC power supply system having at least one voltage output (10) which is fed from at least two DC sources (12, 14) and is alternatively fed from a first DC source (12), to which a supply voltage is supplied, and a further DC source (14) via in each case one switch arrangement (T1, T2, T3) by means of control signals (S1, S2) which control the switch state of the respective switch arrangement (T1, T2, T3) in conjunction with an increase in switching time, the feeding being maintained in the case of switching operations in mutually opposite directions, characterised in that at least one further voltage output (36) is provided, which is fed permanently from one of the voltage sources (12, 14), in that the control signals (S1, S2) are generated as a function of the supply voltage and, as the case may be, externally, the output voltage of the first DC source (12) not dropping abruptly with the supply voltage, and in that timing elements (62, 64, 68) for outputting the control signals are set such that the switches (T1, T2, T3) are switched on jointly during a specific overlap time (t4, t5).

2. System according to Claim 1, characterised in that a switch arrangement is also provided between the respective further voltage output (36) and the voltage source (12) feeding it.

3. System according to Claim 1 or 2, characterised in that at least one switch arrangement (T1, T2, T3) is included as an in-phase regulator in a controlling system provided at the associated voltage output (10).

4. System according to Claim 3, characterised in that the operating voltage of the controlling system is tapped at its voltage output (10).

5. System according to one of the preceding claims, characterised in that the switch arrangement (T1, T2, T3) comprises one or more parallel-connected transistors.

6. System according to one of the preceding claims, characterised in that a switch arrangement comprises a pair or a plurality of parallel-connected pairs of MOS field effect transistors (T2, T3) which are connected in series with their source-drain link channel and of which one MOS field effect transistor (T3) is operated inversely.

7. System according to one of the preceding claims, having a controlled switched-mode power supply (12) as voltage source, characterised in that the switching time is longer than the settling time of the switched-mode power supply.

8. System according to one of Claims 3 to 7, characterised in that the desired voltage value of the controlling system is generated from the associated voltage source (12, 14).

9. System according to one of the preceding claims, characterised in that the increase in the switching time can be varied by setting the respective resistance of the timing elements (28, 30, 32 and 54, 52, 50).

## Revendications

1. Système d'alimentation en tension continue comportant au moins une sortie de tension (10), qui est alimentée par au moins deux sources de tension continue (12,14) et qui reçoit alternativement d'une première source de tension continue (12), à laquelle est appliquée une tension d'alimentation, et par une autre source de tension continue (14), respectivement par l'intermédiaire d'un dispositif de commutation (T1,T2,T3), par des signaux de commande (S1,S2) qui commandent l'état de commutation du dispositif de commutation respectif (T1,T2,T3), moyennant un allongement de la durée de commutation, l'alimentation étant maintenue dans le cas de processus de commutation qui s'effectuent en des sens réciproquement opposés, caractérisé par le fait qu'il est prévu au moins une autre sortie de tension (36), qui est alimentée de façon fixe par l'une des sources de tension (12,14), que les signaux de commande (S1,S2) sont produits dépendamment de la tension d'alimentation et éventuellement de façon externe, la tension de sortie de la première source de tension continue (12) ne diminuant pas de façon brusque avec la tension d'alimentation, et que des circuits de temporisation (62,64,68) servant à délivrer les signaux de commande sont réglés de telle sorte que le dispositif de commutation (T1,T2,T3) est placé en commun à l'état conducteur pendant une durée déterminée de chevauchement (t4, t5).

2. Système suivant la revendication 1, caractérisé par le fait qu'un dispositif de commutation est prévu également entre l'autre sortie de tension respective (36) et la source de tension (12) qui l'alimente.

3. Système suivant la revendication 1 ou 2, caractérisé en ce qu'au moins un dispositif de commutation (T1,T2,T3) est inséré en tant que régulateur longitudinal dans un dispositif de réglage prévu pour la sortie de tension associée (10).

4. Système suivant la revendication 3, caractérisé en ce que la tension de fonctionnement du dispositif de réglage est prélevée sur la sortie de tension (10) de ce dispositif.

5. Système suivant l'une des revendications précédentes, caractérisé par le fait que le dispositif de commutation (T1,T2,T3) est constitué par un ou plusieurs transistors branchés en parallèle.

6. Système suivant l'une des revendications précédentes, caractérisé par le fait qu'un dispositif de commutation est constitué par un couple ou par plusieurs couples, branchés en parallèle, de transistors à effet de champ MOS (T2,T3), dont les voies source-drain sont branchées en série et parmi lesquels un transistor à effet de champ MOS (T3) fonctionne en inverse.

7. Système suivant l'une des revendications précédentes, comportant une partie de réseau à commutation (12) réglé, fonctionnant en tant que source de tension, caractérisé par le fait que la durée de commutation est supérieure à la durée de réglage de la partie de réseau de commutation.

8. Système suivant l'une des revendications 3 à 7, caractérisé par le fait que la valeur de tension de consigne de la tension du dispositif de réglage est produite à partir de la source de tension associée (12,14).

9. Système suivant l'une des revendications précédentes, caractérisé par le fait que le prolongement de la durée de commutation peut être modifié par réglage de la résistance respective des circuits de temporisation (28,30,32 et 54,52,50).
